# EUROPEAN PATENT APPLICATION

(11) **EP 4 450 347 A1**
(43) Date of publication of application: **23.10.2024**
(21) Application number: 24170358.6
(22) Date of filing: 15.04.2024
(51) Int. Cl.: B60W 10/06, B60W 10/18, B60W 10/184, B60W 50/029, B60W 50/035, B60W 50/038, B60W 50/04, B60W 50/10, B60W 50/14

(54) **IMPROVED METHOD AND APPARATUS FOR CONTROLLING A LIMP HOME FUNCTIONALITY OF A WORK VEHICLE AND TRAILER COMBINATION**

(30) Priority: 21.04.2023 IT 202300007866
(71) Applicant: CNH Industrial Italia S.p.A., 10156 Torino (IT)
(72) Inventor: LANGSENLEHNER, Christian, 4300 St. Valentin (AT); CREA, Domenico, 10156 Turin (IT); MANTOVANI, Michele, 10156 Turin (IT); BINI, Francesco, 10156 Turin (IT)
(74) Representative: CNH Industrial IP Department

(57) **Abstract**

There is described a method for controlling a limp home functionality of a work vehicle and trailer combination (1) comprising a work vehicle (2) and a trailer (3) carried or towed by the work vehicle (2); the method comprising the following steps: monitoring the operation of said trailer control system (13) in order to detect any fault that may occur in a trailer control system (13) of said work vehicle (2); if a fault in said trailer control system (13) is detected, providing a signal adapted to inform a work vehicle driver that said failure in said trailer (3) occurred; requesting the work vehicle driver to provide control signals adapted to indicate whether or not to activate a limp home functionality on said work vehicle (2); if the control signals received in step c) indicates to activate said limp home functionality, then activating such limp home functionality; and if the control signals received in step d) indicate to not activate the limp home functionality, then leaving said limp home functionality deactivated.

## Description

### TECHNICAL FIELD

The present invention relates to a method and to an apparatus for controlling a limp home functionality of a work vehicle and trailer combination, in particular of a tractor-trailer combination.

The present invention finds its preferred, although not exclusive, application in the field of agricultural vehicles. Reference will be made to this application by way of example below, without however losing in generality.

### BACKGROUND OF THE INVENTION

As is known, work vehicle and trailer combinations comprise a work vehicle carrying or towing a trailer, for instance a baler, a forage harvester, a manure spreader, or the like.

Such work vehicles are provided with a trailer control system configured to control the operation of the trailer, in particular for controlling the operation of the brake system of the trailer. More in detail, the control system of the work vehicle is configured to control the parking brake system of the trailer.

In addition, the work vehicle may be provided with a limp home functionality configured to limit the performances of the work vehicle, in particular its maximum traveling speed, when a failure is detected.

For instance, failures that can trigger the limp home functionality may comprise transmission failures, engine failures, brake malfunctions, extremely low levels of oil or coolant fluid and/or the like.

In addition, in the aforementioned work vehicles, the limp home functionality may be triggered also when a failure in the trailer control system occurs.

When it is activated, the limp home functionality is configured to allow the work vehicle and trailer combination to travel with a limited speed, in order to reduce the risks for the driver and to avoid making further damages, but still allowing this latter to reach the desired destination.

In addition, the limp home functionality is further configured to allow the driver to safely slow down the work vehicle and trailer combination to a full stop.

The activation of the limp home functionality is usually notified to the work vehicle driver by a warning light on the dashboard carried within the driver's cabin.

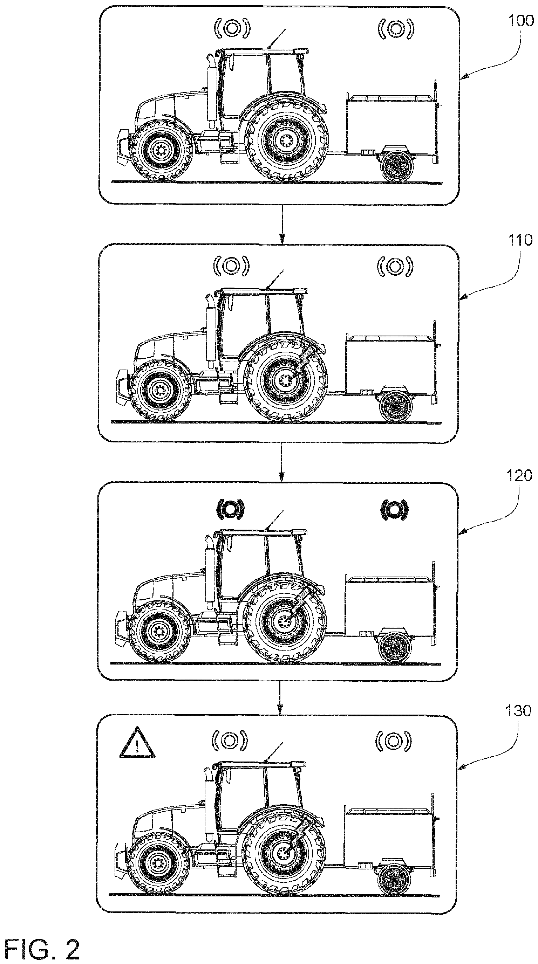

The activation of the limp home functionality for work vehicle and trailer combination as known in the art is schematically represented in figure 2.

However, with the current work vehicle configurations, it is not possible to detect if a trailer is actually attached to the work vehicle.

Therefore, if a failure in the aforementioned control system of the work vehicle is detected, the limp home functionality will be activated even if no trailer is attached to the work vehicle.

In addition, if a failure in the aforementioned control system is detected when a trailer is attached to the work vehicle, the limp home functionality will be triggered and will remain activated even if the trailer is successively decoupled from the work vehicle.

Unfortunately, this will strongly limit the operation and the productivity of the work vehicle, as the limp home functionality will be activated even when no trailer is connected to the work vehicle and, apart from control system dedicated to the control of the trailer, all the other systems of the work vehicle are working properly.

In view of the above, the need is felt to provide a method and a system for controlling a limp mode functionality of a work vehicle and trailer combination able to overcome the above-mentioned drawbacks.

An aim of the present invention is to satisfy the above-mentioned needs in a cost effective and optimized manner.

### SUMMARY OF THE INVENTION

The aforementioned aim is reached by a method and a system as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic side view representation of a work vehicle and trailer combination;
- Figure 2 is a schematic diagram representing a limp home functionality for a work vehicle and trailer combination as known in the art; and
- Figure 3 is a schematic diagram representing a limp home functionality for a work vehicle and trailer combination according to the present invention.

### DETAILED DESCRIPTION OF THE INVENTION

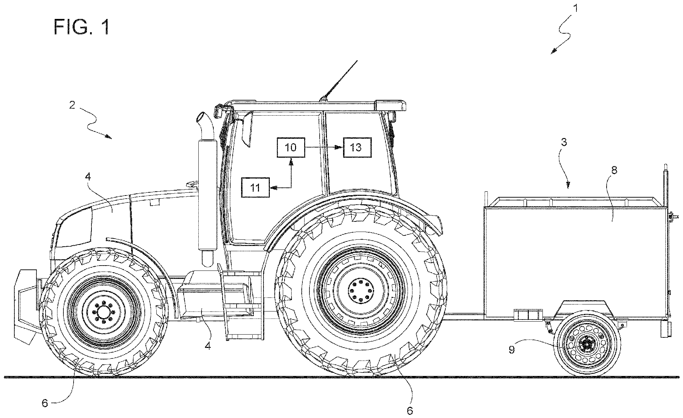

With reference to Figure 1, number 1 denotes as a whole a work vehicle and trailed combination including a work vehicle 2 and a trailer 3 carried or towed by the work vehicle 2.

For instance, work vehicle 2 may comprise an agricultural vehicle such as a tractor.

The trailer 3, on the other hand, may be of any kind, for instance a baler, a forage harvester, a manure spreader or the like.

As known, work vehicle 2 is provided with a powertrain assembly (not illustrated), which is carried by a work vehicle body 4 and is adapted to provide torque to allow motion of the work vehicle body 4 with respect to the ground, e.g. thanks to at least one pair of ground engaging wheels or tracks 6.

More in detail, the powertrain assembly preferably comprises an engine (not illustrated), such as an internal combustion engine, and a transmission assembly (not illustrated), which is carried by the engine and is adapted to be mechanically connected to an output shaft of the vehicle 2, such as a drive axle, to transmit this latter the torque provided at output by engine, in a manner per se known and therefore not further described.

In addition, as always known, work vehicle 2 further comprises a brake system (not illustrated) configured to provide a braking torque to the ground engaging wheels or tracks 6 for braking the work vehicle 2.

As far as the trailer 3 is concerned, it preferably comprises a trailer body 8 configured to be attached to the work vehicle 2, in particular to the rear drawbar or to the rear hitch assembly of the work vehicle 2.

In addition, trailer 3 preferably comprises at least a pair of ground engaging wheels 9 carried in a rotatable manner by the trailer body 8 and configured to allow motion of the trailer body 8 with respect to the ground.

In addition, trailer 3 comprises a brake system coupled to the ground engaging wheels 9 and configured to provide a braking torque adapted to brake the same trailer 3.

In particular, the brake system of trailer 3 may comprise a parking brake system.

In addition, brake system of trailer 3 is preferably a pneumatically actuated brake system, in a manner per se known and therefore not further described.

With reference to the exemplary embodiment illustrated in Figure 1, in addition, work vehicle 2 comprises an electronic control unit 10, which is electrically connected at least to powertrain assembly and/or braking assembly of the same work vehicle 2 and is provided with elaboration means configured to control their operation according to the limp home functionality described more in detail in the following.

As known, the limp home functionality, also called limp mode, is a functionality that may be activated when a fault in the work vehicle is detected.

The limp home functionality, in particular, foresees to control of the powertrain assembly of the same work vehicle 2 to reduce its maximum traveling speed.

Electronic control unit 10 may either be the VCU (Vehicle Control Unit) of work vehicle 2 or it may be separate and distinct from said VCU, and it may be electronically connected to the same VCU. For instance, electronic control unit 10 may be the electronic control unit of the transmission assembly of work vehicle 2.

The control logic mentioned above, for instance, may be deployed into a specific software code, which can be downloaded into the electronic control unit 10 and is configured to execute the control method as described in the following.

In addition, work vehicle comprises input means 11, such as a button, a knob, a joystick, an icon displayed on a touch sensitive screen carried within the driver's cabin and/or other similar HMIs, which is electrically connected to electronic control unit 10 and is configured to be manipulated/handled/operated by the user to provide control signals to control unit 10 adapted to control the operation of work vehicle 2.

As generally known, electronic control unit 10 may be configured to perform a limp home functionality when a fault or a failure in the work vehicle 2 is detected. For instance, electronic control unit may be configured to trigger such limp home functionality when a fault in the powertrain assembly and/or in the braking assembly of the work vehicle 2 is detected.

When such limp home functionality is activated, electronic control unit 10 is configured to control powertrain assembly in order to limit the performances of work vehicle 2, in particular to reduce the maximum available traveling speed of work vehicle 2 to a safety value.

The activation of such limp home functionality may be notified to the work vehicle driver by means of a warning light on a dashboard carried in a driver's cabin of work vehicle 2, in a manner per se known and therefore not further described.

With reference to the exemplary embodiment illustrated in Figure 1, work vehicle 2 further comprises a control system 13, in the following referred to as "trailer control system", which is adapted to be operatively connected to the trailer 3 to control its operation.

In particular, trailer control system 13 is preferably configured to be operatively connected to the brake system of trailer 3.

Trailer control system 13 may comprise a further electronic control unit electrically connected to electronic control unit 10 and control valves, for instance pneumatic control valves, adapted to control the operation of the brake system of trailer 3, in a manner per se known and therefore non further described.

Electronic control unit 10 is configured to provide the trailer control system 13 with control signals adapted to control the operation of the braking system of trailer 3.

In addition, electronic control unit 10 is configured to detect if failures in the trailer control system 13 occur.

In response to the detection of a failure in trailer control system 13, electronic control unit 10 is preferably configured to allow the work vehicle driver to drive work vehicle 2 to stop.

In particular, electronic control unit 10 may be configured to control the powertrain assembly and/or the braking assembly of work vehicle 2 in order to allow the work vehicle driver to drive this latter to a complete halt, if suitable control commands are provided by the driver to the electronic control unit 10.

In addition, electronic control unit 10 is configured to provide control signal adapted to control an output unit of work vehicle 2 in order to notify the work vehicle driver of the fault occurred in the trailer control system 13.

In particular, electronic control unit 10 may be configured to activate a warning light on a dashboard and/or to display an icon on a touch sensitive display carried within the driver's cabin of work vehicle 3.

In addition, input means 11 are adapted to be operated /handled by the work vehicle driver in order to allow the same work vehicle driver to provide the electronic control unit 10 with control signals adapted to activate such limp home functionality.

In other words, if a failure in the trailer control system 13 is detected, electronic control unit 10 is configured to provide a request to activate the limp home functionality too work vehicle driver. Then, electronic control unit 10 is configured to activate the limp home functionality only if a consent is provided by work vehicle driver via input means 11.

If a signal to activate such limp home functionality is received by input means 11, electronic control unit 10 is configured to activate the limp home functionality accordingly, thus reducing the maximum traveling speed of work vehicle 2 to the safety value.

On the other hand, if a signal to refuse the activation of such limp home functionality is received by input means 11, electronic control unit 10 is configured to leave the limp home functionality of work vehicle 2 deactivated.

In this manner, work vehicle driver may detach the trailer 3 from work vehicle 2 and operate the work vehicle 2 without further limitations, i.e. with the limp home functionality deactivated. At the same time, the parking brake system of trailer 3 may be engaged and the same trailer 3 can be simply detached from work vehicle 2 and left parked in a safe area.

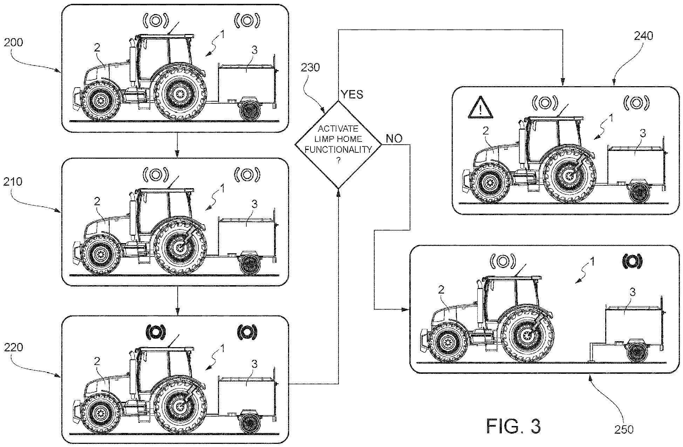

The operation of the above-described work vehicle and trailer combination 1 is schematized in Figure 3 and is described in the following.

In a first phase, supposing that the work vehicle and trailer combination is working properly and no fault in the trailer control system is detected, the limp mode functionality is not activated.

In a second phase, if a fault in trailer control system 3 is detected, work vehicle 2 may be controlled by work vehicle driver in order to safely drive work vehicle and trailer combination 1 to a full stop.

In addition, a warning message is displayed to the work vehicle driver, for instance by displaying a message/ notification/ icon on a dashboard or on a touch sensitive display carried within the driver's cabin of work vehicle 2, and the activation of the limp home functionality is requested.

In a subsequent phase, if the work vehicle 2 driver provides control signals via input means 11 to the electronic control unit 10 adapted to allow the activation of such limp home functionality, electronic control unit 10 activates the limp home functionality and limits the maximum traveling speed of work vehicle 2 accordingly.

On the other hand, if the work vehicle 2 driver provides control signals via input means 11 to the electronic control unit 10 adapted to refuse the activation of such limp home functionality, such limp home functionality is not activated, and accordingly the work vehicle 2 may be operated without limitations.

In addition, the work vehicle driver may also engage the parking brake system of trailer 3.

This for instance may allow the work vehicle driver to detach the trailer 3 from work vehicle 2 and to operate the work vehicle 2 without any limitations, while the trailer 3 can be simply detached from work vehicle 2 and left parked in a safe area.

In view of the above and with reference to Figure 3, the present invention is directed to a method for controlling a limp home functionality of the work vehicle and trailer combination 1, the method comprising the following steps:
a) monitoring the operation of the trailer control system 13 in order to detect any fault that may occur in the same trailer control system 13 (block 200);
b) if a fault in trailer control system 13 is detected, providing a signal adapted to inform the work vehicle driver that a failure in trailer control system 13 occurred (block 210);
c) requesting the activation of a limp home functionality of work vehicle 2 (block 230);
d) if the work vehicle driver provides control signals adapted to allow/consent the activation of the limp home functionality, then activating such limp home functionality (block 240); or
e) if the work vehicle driver provides control signals adapted to refuse the activation of the limp home functionality, leaving the limp home functionality of the work vehicle 2 deactivated (block 240).

Moreover, the method may further comprise the step of engaging the parking brake system of trailer 3.

In addition, the method may further comprise the step of detaching the trailer 3 from the work vehicle 2.

Preferably, after step a), the method may further comprise the step of allowing the work vehicle driver to control the work vehicle 2 in order to slow down work vehicle and trailer combination 1 (block 220), advantageously to a full stop.

In view of the foregoing, the advantages of the work vehicle and trailer combination 1 and the related control method are substantial and apparent.

Indeed, thanks to the proposed control method, when a fault in the trailer control system 13 is detected, the work vehicle driver may decide whether to activate the limp home functionality and to safely but slowly drive the work vehicle and trailer combination 1 to the destination, or alternatively he can decide to not activate the limp home functionality on work vehicle 2 and to activate the parking brake system of the trailer 3.

In other words, when a failure in the trailer control system 13 is detected, according to the proposed method it is left to the work vehicle driver discretion whether or not activate the limp home mode functionality.

Accordingly, the work vehicle driver has either the possibility to insert the parking brake system of trailer 3, detach the same trailer 3 from the work vehicle 2, and operate the work vehicle 2 without any limitation, simply leaving the trailer 3 behind, or he can allow the activation of the limp home functionality and he can slowly but safely drive the work vehicle and trailer combination 1 to destination.

According to the above, the operation and the productivity of the work vehicle 2 is not limited by a fault which may occur on the trailer control system 13, without however affecting the safety of the work vehicle and trailer combination 1. Indeed, the work vehicle 2 may be operated for different missions or agricultural jobs without undue limitations, while the trailer may be retrieved by a different work vehicle 2 with a properly operating trailer control system 13.

It is clear that modifications can be made to the described work vehicle and trailer combination 1 and to the above-described control method, which do not extend beyond the scope of protection defined by the claims.

## Claims

1. A method for controlling a limp home functionality of a work vehicle and trailer combination (1),
said work vehicle and trailer combination (1) comprising a work vehicle (2) and a trailer (3) adapted to be carried by said work vehicle (2);
said work vehicle (2) being provided with a powertrain assembly adapted to provide at output a torque to allow motion of a work vehicle body (4) thanks to ground engaging means (6), a brake system adapted to provide a braking torque to brake said work vehicle body (4), and a trailer control system (13) adapted to be operatively connected to said trailer (3) to control its operation; and
said trailer (3) comprising a trailer body (8) carrying ground engaging means (9) adapted to allow motion of said trailer body (8) with respect to the ground and a brake system configured to provide a braking torque adapted to brake said trailer (3);
said method comprising the following steps:
a) monitoring the operation of said trailer control system (13) in order to detect any fault that may occur in said trailer control system (13);
b) if a fault in said trailer control system (13) is detected, providing a signal adapted to inform a work vehicle driver that said failure in said trailer control system (13) occurred;
c) requesting the activation of a limp home functionality of said work vehicle (2);
d) if the work vehicle driver provides control signals adapted to allow the activation of said limp home functionality, then activating said limp home functionality; and
e) if the work vehicle driver provides control signals adapted to refuse the activation of said the limp home functionality, leaving said limp home functionality of said work vehicle (2) deactivated.

2. Method according to claim 1, further comprising the step of engaging the brake brake system of said trailer (3).

3. Method according to claim 2, further comprising the step of detaching said trailer (3) from said work vehicle (2).

4. Method according to claim 1, 2 or 3, further comprising, after said step b) and before said step c), the step of allowing the work vehicle driver to control said work vehicle (2), in order to slow down work vehicle and trailer combination (1).

5. Method according to claim 4, wherein the step of controlling said work vehicle (2) in order to slow down work vehicle and trailer combination (1) comprises the step of driving said work vehicle and trailer combination (1) to a full stop.

6. Method according to any of the preceding claims, wherein said work vehicle (2) comprises a driver's cabin carrying a dashboard and/or a display,
said step b) comprising the step of displaying a message and/or activating a warning light on said dashboard and/or display.

7. Apparatus for controlling a work vehicle and trailer combination (1),
said work vehicle and trailer combination (1) comprising a work vehicle (2) and a trailer (3) adapted to be carried by said work vehicle (2);
said work vehicle (2) being provided with a powertrain assembly adapted to provide at output a torque to allow motion of a work vehicle body (4) thanks to ground engaging means (6), a brake system adapted to provide a braking torque to brake said work vehicle body (4), and a trailer control system (13) adapted to be operatively connected to said trailer (3) to control its operation; and
said trailer (3) comprising a trailer body (8) carrying ground engaging means (9) adapted to allow motion of said trailer body (8) with respect to the ground and a brake system configured to provide a braking torque adapted to brake said trailer (3);
said apparatus comprising an electronic control unit (10) programmed to implement the method of any of the foregoing claims.

8. A software code comprising instructions which, when the program is executed by said electronic control unit (10) of the apparatus of claim 7, cause the electronic control unit (32) to carry out the method of any of claims 1 to 6.

9. A computer-readable means having stored thereon the software code of claim 8.
